(19) Europäisches Patentamt
European Patent Office
Office européen des brevets

(11) **EP 2 669 041 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(51) Int Cl.:
**B23K 26/12** (2014.01)   **B23K 26/00** (2014.01)

(21) Anmeldenummer: **13002754.3**

(22) Anmeldetag: **28.05.2013**

(54) **Verfahren zur Nanostrukturierung und chemischen Modifikation von keramischen, Glas-, Kohlenstoff-, Bor-, Silicium- und Verbundwerkstoffmaterialien**

Method for the nanostructuring and chemical modification of ceramic, glass, carbon, boron, silicon and composite materials

Procédé de nanostructuration et de modification chimique de matériaux en céramique, en verre, en carbone, en bore, en silicium et en matières composites

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2012 DE 102012010592**
**16.08.2012 DE 102012016204**

(43) Veröffentlichungstag der Anmeldung:
**04.12.2013 Patentblatt 2013/49**

(73) Patentinhaber: **Airbus Defence and Space GmbH**
**85521 Ottobrunn (DE)**

(72) Erfinder:
• **Brandl, Erhard**
**85117 Eitensheim (DE)**

• **Kurtovic, Ante**
**33106 Paderborn (DE)**
• **Wilhelmi, Christian**
**85635 Höhenkirchen-Siegertsbrunn (DE)**

(74) Vertreter: **Isarpatent**
**Patent- und Rechtsanwälte Behnisch Barth Charles**
**Hassa Peckmann & Partner mbB**
**Postfach 44 01 51**
**80750 München (DE)**

(56) Entgegenhaltungen:
DE-A1-102004 034 824    DE-A1-102009 028 583
DE-A1-102009 051 717    DE-C1- 19 523 900
US-A- 6 120 725    US-A1- 2008 070 001

## Beschreibung

### Gebiet der Erfindung

Die Erfindung betrifft ein Verfahren zur Erzeugung einer bestimmte Materialien umfassenden Oberfläche, welche Oberflächenstrukturen mit Abmessungen im Sub-Mikrometerbereich aufweist und gegenüber der Ausgangsoberfläche chemisch modifiziert ist, ein Werkstück, das eine solche Oberflächenstrukturen umfassende Oberfläche aufweist, sowie die Verwendung eines solchen Werkstücks beim Zusammenfügen oder Beschichten des Werkstücks mit einem weiteren Material.

### Stand der Technik

Die Benetzbarkeit mit und Haftung von flüssigen, halbfesten und festen Substanzen auf der Oberfläche von Werkstücken beispielweise aus Keramik, Bor, Silicium oder Kohlenstoff hängt stark von deren Oberflächenbeschaffenheit ab.

Dies ist bei der Behandlung mit oder Aufbringung und Haftung von Materialien wie beispielsweise Klebstoff, Lack, Lot, Knochenzement, Dichtmittel, Haftvermittler, Schichten zum Schutz vor chemischer oder Wärmeeinwirkung oder auch biologischem Gewebe von hoher Bedeutung. Entfettung und anderweitige weitere Reinigung sowie mechanische Aufrauhung erhöhen die Benetzbarkeit und Haftung bis zu einem gewissen Grad. Mit zunehmender Rauigkeit der Oberfläche, d.h. größerer und strukturierterer Oberfläche und dadurch erhöhter chemischer/mechanischer Verankerung aufzubringender Materialien, verbessern sich diese Eigenschaften aber noch wesentlich.

Die EP 0 914 395B1 beschreibt ein Verfahren zur Behandlung einer ungereinigten Metalloberfläche, das die Behandlung der Oberfläche mit einem Organosilan und das Belichten der Oberfläche mit einem Laser umfasst.

Aus der US 6 120 725 A ist ein Verfahren zum Bilden eines komplexen Profils von unebenen Vertiefungen in der Oberfläche eines abtragbaren Werkstücks durch Laserablation unter Verwendung einfacher Optik oder einer Maske einfacher Konfiguration bekannt.

Es war ein Ziel der Erfindung, ein einfaches Verfahren möglichst ohne Notwendigkeit des Einsatzes von Chemikalien zur Erzeugung einer guten Rauigkeit auf Oberflächen aus Keramik, Glas, Kohlenstoff, Bor, Silicium und Verbundwerkstoffen zu entwickeln, durch das die Oberflächen zur Verbesserung der Haftung außerdem noch chemisch modifiziert werden.

### Zusammenfassung der Erfindung

Die Erfindung betrifft eine Verfahren gemäß Anspruch 1.

### Kurze Beschreibung der Figuren

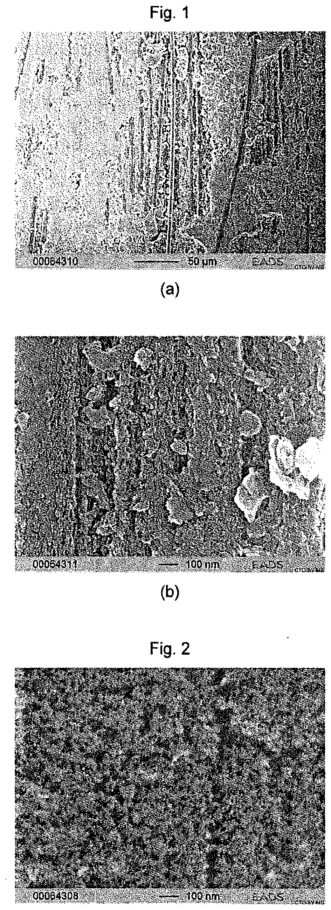

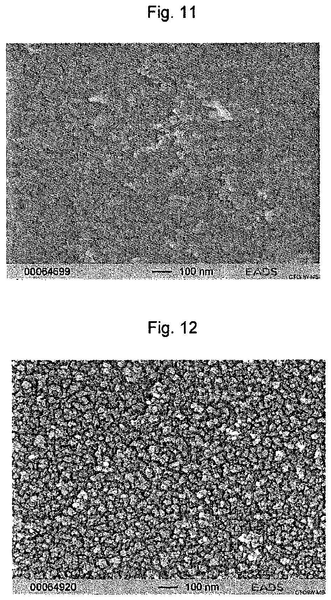

Die Figuren 1 bis 12 sind Rasterelektronenmikrographien, die unbehandelte und behandelte Oberflächen zeigen, wie in den Beispielen 1 bis 3 näher erläutert.

### Detaillierte Beschreibung

Wie eingangs erwähnt, ist die Aufrauhung bzw. Strukturierung im SubmikrometerBereich von Oberflächen für eine gute Haftung von Klebstoffen, Lacken, biologischem Gewebe und sonstigen Beschichtungen, wie Wärmeschutzschichten und metallischen Haftvermittlerschichten, essentiell.

Es wurde nun überraschend gefunden, dass lediglich durch eine einmalige oder mehrmalige Bestrahlung mit einem gepulsten Laser unter den im vorstehend beschriebenen Verfahren genannten Bedingungen sub-mikrostrukturierte (oder nanostrukturierte) Oberflächen der genannten Art erzeugt werden können, die für eine ausgezeichnete Haftung z.B. von Klebstoffen, Lacken, Lot, Dichtmittel, Knochenzement, Haftvermittler oder biologischem Gewebe sowie von Beschichtungen, wie Beschichtungen zum Schutz vor chemischer oder Wärmeeinwirkung, sorgen.

Wenn zwei Werkstücke mit einer wie oben genannten Oberfläche oder ein solches Werkstück mit einem anderen Werkstoff unter Druck miteinander verbunden werden, kann auch die Haftung dieser gefügten Materialien erhöht werden, wenn auf mindestens einer Seite erfindungsgemäß Nanostrukturen erzeugt worden sind.

Die erfindungsgemäß erzeugten, mit Oberflächenstrukturen versehenen Oberflächen können je nach Ausführungsform im Allgemeinen offenporige, zerklüftete und/oder fraktalartige Nanostrukturen, wie offenporige Berg- und Tal-Strukturen, offenporige hinterschnittene Strukturen und blumenkohl- oder knollenartige Strukturen, aufweisen. Mindestens etwa 80%, bevorzugt mindestens etwa 90%, noch bevorzugter mindestens etwa 95% Erhebungen weisen eine Größe < 1 $\mu$m auf, die sich zum Beispiel im Bereich von etwa 10 nm bis etwa 200 nm bewegt. Mindestens etwa 80%, bevorzugt mindestens etwa 90%, noch bevorzugter mindestens etwa 95% der Zwischenräume weisen ebenfalls Breiten < etwa 1 $\mu$m auf, z.B. etwa 10 nm bis etwa 50 nm. Die Länge der "Täler" bei Berg- und Tal-Strukturen beträgt jedoch häufig mehr als etwa 1 $\mu$m.

Derartige Nanostrukturen bedecken in der Regel zumindest etwa 90 % der als Ebene berechneten Oberfläche, bevorzugt mindestens etwa 95 %. Bei optimal abgestimmten Prozessparametern (insbesondere Repetitionsrate, Abtastgeschwindigkeit und Fokusdurchmesser) kann die Nanostruktur sogar etwa 100% der als Ebene berechneten Oberfläche bedecken. Bei Verbundwerkstoffen, bei denen an der Oberfläche sowohl die Matrix als auch das der Matrix einverleibte Material, z.B. anorganische Fasern, vorliegen, kann es auch vorteilhaft sein, nur die Matrix oder nur das einverleibte Material zu strukturieren. In diesem Fall bezieht sich die vorstehend erwähnte Oberfläche auf die Oberfläche allein der Matrix oder allein des einverleibten Materials, wie anorganische Fasern.

Das Abtasten der Ausgangoberfläche mit dem Laserstrahl kann einmal oder mehrmals hintereinander mit derselben Wellenlänge oder mit unterschiedlichen Wellenlängen durchgeführt werden. Durch mehrmaliges Abtasten kann unter Umständen eine noch feinere Struktur erzeugt werden.

Gewöhnlich wird die Ausgangsoberfläche, die Material umfasst, das aus einer Keramik, einem Keramik-Grünvorkörper einem anorganischen Glas, Kohlenstoff, Bor, Silicium und/oder einen Fasern und/oder nicht faserigen Kohlenstoff und/oder Bornitrid enthaltenden Verbundwerkstoff mit Kohlenstoff- und/oder Keramikmatrix, einem Grünvorkörper des letztgenannten Verbundwerkstoffs und/oder einem Verbundwerkstoff aus einem Metall und/oder einer Metalllegierung, das bzw. die wärmeleitende kohlenstoffhaltige und/oder Bornitrid-haltige Teilchen und/oder Fasern enthalten und zumindest teilweise mit einer Oxidschicht überzogen sein kann, oder deren Mischungen ausgewählt ist (nachstehend zusammenfassend als das erfindungsgemäße Oberflächenmaterial bezeichnet), vor dem Abtasten mit dem Laserstrahl nicht vorbehandelt oder gereinigt, obwohl dies nicht ausgeschlossen wird; z.B. kann die Oberfläche mit einem Lösungsmittel gereinigt werden. Auf keinen Fall wird sie jedoch wie in der EP 0 914 395 B1 beschrieben vor dem Abtasten mit einem Haftvermittler, wie beispielsweise einem Silanhaftvermittler, einem Titanat, wie Titatetraisopropylat oder Titanacetylacetonat, einem Zirconat, wie Zirconiumtetrabutylat, einem Zirconiumaluminat, einemThiazol, einem Triazol, wie 1H-Benzotriazol, einem Phosphonat oder einem Sulfonat, zur Erhöhung der Haftfestigkeit an ein mit der Oberfläche zu verbindendes oder auf diese aufzubringendes Material behandelt. Auch nach dem Abtasten wird kein Haftvermittler, zur Erhöhung der Haftfestigkeit aufgetragen, bevor die Oberfläche mit einer anderen Oberfläche verbunden und/oder eine Beschichtung, wie ein Klebstoff, Lack, Lot, Dichtmittel, Knochenzement oder biologisches Gewebe und/oder eine sonstige Beschichtung, bei der es sich z.B. um einen Schutzüberzug, schmutzabweisenden oder Anti-Haftungsüberzug, Überzug zum Schutz vor chemischer oder Wärmeeinwirkung oder sonstigen funktionellen Überzug handeln kann, anhaften gelassen und/oder aufgebracht wird.

Die Keramik oder die Keramik der Keramikmatrix des Verbundwerkstoffes, aus der das erfindungsgemäße Oberflächenmaterial gebildet sein kann, kann aus allen bekannten Keramiken ausgewählt sein. Dazu gehören Silikatkeramiken, Oxidkeramiken, wie Aluminiumoxid, Siliciumdioxid, Aluminiumoxid-Siliciumdioxid (Mullit), SiOC, Berylliumoxid, Zirconium(IV)oxid und Aluminiumtitanat und Gemische derselben, wie $Al_2O_3$-$SiO_2$/SiOC, nichtoxidische Keramiken, wie Siliciumcarbid, Wolframcarbid, Siliciumnitrid, Bornitrid, Aluminiumnitrid, SiCN und Molybdändisilicid, Glaskeramiken, Porzellan und Keramiken aus Kombinationen der vorstehenden Keramiken.

Das erfindungsgemäße Keramik-Oberflächenmaterial kann auch ein Keramiküberzug sein.

Weitere Keramikmaterialien (ohne Anspruch auf Vollständigkeit), die insbesondere, aber nicht nur, als Überzüge verwendet werden, sind die Carbide $B_4C$, TiC, TaC, HfC, ZrC, $Cr_3C_2$, $Al_4C_3$, MoC2, NbC und VC, die Nitride TiN, $CrN_{1-x}$, CrN, $Li_3N$. TaN, und ZrN, die Silicide $WSi_2$ und $ZrSi_2$, die Boride $ZrB_2$, $HfB_2$, $TiB_2$, $LaB_6$, $Cr_B$, $CrB_2$, $AlB_2$, $MgB_2$ und $SiB_6$ und die Oxide CaO, MgO, $ThO_2$, $TiO_2$, $P_2O_5$, SiAlON, $Y_2O_3$, $HfO_2$, $ZrO_2$ und $B_2O_3$.

Bei dem anorganischen Glas, das das erfindungsgemäße Oberflächenmaterial bilden kann, kann es sich um jedes Glas handeln. Beispiele sind Quarzglas, Borosilikatglas, Kalk-Natron-Glas und Bleikristallglas, um nur einige zu nennen.

Auch anorganische Grünvorkörper von Keramiken und von Fasern und/oder Kohlenstoff und/oder Bornitrid enthaltenden Verbundwerkstoffen mit Kohlenstoff- und/oder Keramikmatrix können mit einer erfindungsgemäßen Oberflächenstruktur versehen werden.

Die Oberflächen von anorganischen Grünvorkörpern von Keramiken wie Silikatkeramiken und Oxidkeramiken, die ja nur getrocknet und/oder ausgehärtet, aber nicht gebrannt sind, werden durch die Laserbehandlung nanostrukturiert und zumindest teilweise im Laserstrahl gebrannt, wodurch sich ihre Oberflächenzusammensetzung ändert.

Bei dem Kohlenstoff oder dem Kohlenstoff der Kohlenstoffmatrix des Verbundwerkstoffes, aus dem das erfindungsgemäße Oberflächenmaterial gebildet sein kann, handelt es sich in der Regel um härtere Kohlenstoffvarianten, wie glasartigen Kohlenstoff, diamantartigen Kohlenstoff, pyrolytisch hergestellten Graphit oder durch Dampfabscheidung oder chemische Dampfabscheidung (vapor deposition oder chemical vapor deposition) hergestellten Kohlenstoff.

Erfindungsgemäße Oberflächen können auch die Halbmetalle Bor und Silicium umfassen.

Die Verbundwerkstoffe, die das erfindungsgemäße Oberflächenmaterial bilden können, können auch als Mischungen vorliegen.

Bei ihnen kann es sich um anorganische Fasern enthaltende (faserverstärkte) Verbundwerkstoffe mit den oben genannten Matrices handeln.

Bei den Verbundwerkstoff-Fasern kann es ich um alle anorganischen Fasern handeln, die der Fachmann für den Einsatz in Verbundwerkstoffen kennt. Dazu zählen insbesondere Carbonfasern, Glasfasern und Keramikfasern. Die Fasern können kurz oder lang sein und können zu Rovings (Multifilamenten) verbunden sein.

Besonders bevorzugte Keramikfasern basieren auf Oxidkeramikfilament-Fasern, insbesondere $Al_2O_3$- oder $Al_2O_3/SiO_2$ (Mullit)-Faser und/oder Nicht-Oxidkeramikfilament-Fasern, insbesondere SiC-, SiCN- und SiBNC-Faserarten.

Häufig sind die Fasern in den faserverstärkten Verbundwerkstoffen beschichtet, um eine schwache Faser-Matrix-Grenzflächenwechselwirkung zu gewährleisten. Das ist in der Regel für ein gutes mechanisches Verhalten sowie für einen Faserschutz erforderlich. Derartige Beschichtungen können z.B. aus pyrolytischem Kohlenstoff, SiC, BN, $LaPO_4$, $CePO_4$, $CaWo_4$, $ZrO_2$, Mullit, $Al_2O_3$, Magnetoplumbiten, $\alpha$-Aluminat-Strukturen, $LaAl_{11}O_{18}$, $CaAl_{12}O_{19}$, $BaMg_2Al_{16}$,$O_{27}$, $KMg_2Al_{15}O_{25}$, Lanthan- und Calciumhexaaluminaten, Hexaaluminaten, organometallischen Verbindungen oder Gemischen und/oder Multilayer daraus ausgewählt sein.

Die faserverstärkten Verbundwerkstoffe können noch zusätzliche inerte oder passive Füllstoffe enthalten, z.B. Metallpulver und/oder Keramikpulver, das nicht mit der Keramikmatrix, falls verwendet, verbunden ist.

Unter nicht faserigen Kohlenstoff und/oder Bornitrid enthaltenden Verbundwerkstoffen mit Keramik- oder Kohlenstoffmatrix, aus denen das erfindungsgemäße Oberflächenmaterial gebildet sein kann, versteht man Keramik- oder Kohlenstoffmatrices, die mit kohlenstoffartigen Teilchen außer Carbonfasern versehen sind. Zu diesen kohlenstoffhaltigen Teilchen gehören insbesondere graphitartige Teilchen, Kohlenstoff-Nanoröhrchen, Fullerene und diamantartige Teilchen. Bei dem Bornitrid handelt es sich bevorzugt um Teilchen aus kubischem Bornitrid.

Bei einem weiteren Verbundwerkstoff, aus dem das erfindungsgemäße Oberflächenmaterial gebildet sein kann, handelt es sich um Metalle und/oder Metalllegierungen, die wärmeleitende kohlenstoffhaltige und/oder Bornitrid-haltige Teilchen und/oder Fasern enthalten und zumindest teilweise mit einer Oxidschicht überzogen sein können. Bei diesen Fasern und Teilchen kann es sich insbesondere um Carbonfasern, graphitartige Teilchen, Kohlenstoff-Nanoröhrchen, diamantartige Teilchen, Fasern aus Bornitrid und Teilchen aus kubischem Bornitrid handeln.

Auch mit Metall modifizierte Keramiken, also Metall-Keramik-Verbundwerkstoffe, können das erfindungsgemäße Material bilden.

Der Werte von $\varepsilon$, die sich aus den Parametern der oben angegebenen Gleichung ergeben müssen, damit die erfindungsgemäß angestrebte Oberflächenstrukturierung erzeugt wird, liegen bevorzugt bei etwa 0,07 oder etwa 0,1 ≤ $\varepsilon$ ≤ etwa 2300 oder etwa 2000, mehr bevorzugt bei etwa 0,1 ≤ $\varepsilon$ ≤ etwa 1700 oder etwa 1500.

Im Folgenden werden bevorzugte Parameter des Verfahrens der Erfindung angegeben. Es muss betont werden, dass alle Parameter unabhängig voneinander variiert werden können.

Der Druck liegt im Allgemeinen im Bereich von etwa 0,001 mbar als bis etwa 15 bar und die Temperatur im Bereich von etwa -50°C bis etwa 350°C. Dies sind Temperaturen, die außerhalb des Laserstrahls vorherrschen. Im Laserstrahl können natürlich wesentlich höhere Temperaturen entstehen.

Die Impulslänge der Laserimpulse t beträgt vorzugsweise etwa 0,1 ns bis etwa 2000 ns, mehr bevorzugt etwa 0,1 bis etwa 900 ns oder 800 ns, manchmal auch etwa 5 ns bis etwa 200 ns.

Die Impulsspitzenleistung der austretenden Laserstrahlung $P_p$ beträgt vorzugsweise etwa 1 kW bis etwa 1800 kW, mehr bevorzugt etwa 3 kW bis etwa 650 kW.

Die mittlere Leistung der austretenden Laserstrahlung $P_m$ beträgt vorzugsweise etwa 5 W bis etwa 28000 W, mehr bevorzugt etwa 20 W bis etwa 9500 W.

Die Repetitionsrate der Laserimpulse f beträgt vorzugsweise etwa 10 kHz bis etwa 3000 kHz, mehr bevorzugt etwa 10 kHz bis etwa 950 kHz.

Die Abtastgeschwindigkeit an der Werkstückoberfläche v beträgt vorzugsweise etwa 30 mm/s bis etwa 19000 mm/s, mehr bevorzugt etwa 200 mm/s bis etwa 9000 mm/s.

Der Durchmesser des Laserstrahls am Werkstück d beträgt vorzugsweise etwa 20 $\mu$m bis etwa 4500 $\mu$m, mehr bevorzugt etwa 50 $\mu$m bis etwa 3500 $\mu$m.

Die Laserwellenlänge $\lambda$ kann etwa 100 nm bis etwa 11000 nm betragen. Als Laser können z.B. Festkörperlaser, wie z.B. Nd:YAG ($\lambda$ = 1064 nm oder 533 nm oder 266 nm), Nd:YVO$_4$ ($\lambda$ = 1064 nm), Diodenlaser mit z.B. $\lambda$ = 808 nm, Gaslaser, wie z.B. Excimer-Laser, mit z.B. KrF ($\lambda$ = 248 nm) oder H$_2$ ($\lambda$ = 123 nm bzw. 116 nm) oder ein CO$_2$-Laser (10600 nm) benutzt werden.

Der Schmelzpunkt oder die Zersetzungstemperatur $T_L$ bei Normaldruck, die spezifische Wärmekapazität $c_p$ bei Normalbedingungen, die spezifische Wärmeleitfähigkeit $\kappa$ bei Normalbedingungen und die Absorption der Laserstrahlung des bestrahlten Material $\alpha$ bei Normalbedingungen, die in den oben erwähnten Ausdruck für $\varepsilon$ einzusetzen sind, sind demnach einfach Materialeigenschaften der behandelten Materialien.

Bei Materialien, die nur unter Zersetzung schmelzen oder sich ohne zu schmelzen ab einer bestimmten Temperatur zersetzen, bedeutet $T_L$ die Zersetzungstemperatur des Materials.

Es sollte noch erwähnt werden, dass naturgemäß nur solche Oberflächenbereiche behandelt werden können, die von einem Laserstrahl erreicht werden können. Bereiche, die vollständig "im Schatten" (z.B. bei hinterschnittenen Geometrien) liegen, können auf die hierin beschriebene Weise nicht strukturiert und chemisch modifiziert werden.

Es wird geglaubt - jedoch ohne dass man an eine Theorie gebunden sein will - dass der Mechanismus der Oberflächenstrukturierung und -modifikation ein partielles Verdampfen, Kondensieren und Erstarren des behandelten Materials an der Oberfläche sowie ein Wiedererstarren von geschmolzenem und zumindest partiell durch Reaktion mit dem Gas chemisch modifiziertem Material beinhaltet. Die verdampfte Menge des Materials sowie der Bereich, indem das Material schmilzt, dürften von der Intensität des Lichtes an jeder einzelnen Stelle der Oberfläche abhängen. Bei einer oxidhaltigen Oberfläche ist es zum Beispiel denkbar, dass unter dem Laserlicht zunächst Sauerstoff von der Oberfläche abdampft, wobei er sich dann beim Abkühlen entweder wieder mit der Oberfläche verbinden würde oder durch ein Atom eines anderen Gases ersetzt würde. Auch das bloße Schmelzen und Wiedererstarren oder das bloße Verdampfen könnte zu einer dendritischen, offenporigen, zerklüfteten, und/oder fraktalartigen Struktur führen.

Zu den reaktiven Gasen, in denen das Verfahren durchgeführt wird, gehören beispielsweise anorganische Gase oder Gasgemische, wie z.B. Wasserstoff, Luft, Sauerstoff, Stickstoff, Halogene, Kohlenstoffmonoxid, Kohlenstoffdioxid, Ammoniak, Stickstoffmonoxid, Stickstoffdioxid, Distickstoffmonoxid, Schwefeldioxid, Schwefelwasserstoff, Borane und/oder Silane (z.B. Monosilan und/oder Disilan).

Organische Gase oder Gase mit organischen Gruppen können ebenfalls eingesetzt werden. Dazu gehören z.B. niedere, gegebenenfalls halogenierte Alkane, Alkene und Alkine, wie Methan, Ethan, Ethen (Ethylen), Propen (Propylen), Ethin (Acetylen), Methylfluorid, Methylchlorid und Methylbromid, sowie Methylamin und Methylsilan. Auch eine Mischung eines anorganischen und organischen oder organische Gruppen enthaltenden Gases kann verwendet werden.

Wenn ein Gasgemisch vorliegt, genügt es, dass ein Gasbestandteil desselben oder eine Mischung von mehreren Gasbestandteilen ein reaktives Gas ist; bei dem Rest kann es sich um ein inertes Gas, in der Regel ein Edelgas, handeln. Die Konzentration des reagierenden Gases oder Gasgemisches kann von wenigen ppb, z.B. 5 ppb, bis zu mehr als 99 Vol.-% variieren.

Die Auswahl des Gases oder Gasgemisches hängt natürlich von der beabsichtigten Modifikation des erfindungsgemäßen Oberflächenmaterials ab. Wenn eine oxidhaltige Oberfläche reduziert werden soll, um z.B. Hydroxidgruppen einzuführen, wird man natürlich ein reduzierendes Gas wie Wasserstoff als reaktives Gas (gegebenenfalls in Mischung mit einem inerten Gas) verwenden.

Für eine Oxidation der Oberfläche wird man hingegen z.B. ein sauerstoffhaltiges Gas in Betracht ziehen. Dem Fachmann ist bekannt, welches reaktive Gas er wählen muss, um damit bei einem gegebenen erfindungsgemäßen Oberflächenmaterial einen gewünschten Effekt zu erzielen.

Der Druck des Gases oder Gasgemisches liegt im Allgemeinen im Bereich von etwa 0,001 mbar bis etwa 15 bar. Bevorzugt wird bei Umgebungsdruck gearbeitet. Es kann bei Gastemperaturen gearbeitet werden, die außerhalb des Laserstrahls im Allgemeinen im Bereich von etwa -50°C bis etwa 350°C liegen. Im Laserstrahl können natürlich wesentlich höhere Temperaturen entstehen.

Eine erfolgte chemische Modifikation eines gegebenen erfindungsgemäßen Oberflächenmaterials kann durch geeignete Analyseverfahren, wie X-Ray Photoelectron Spectroscopy (XPS), EDX (energy dispersive X-ray analysis), FTIR-Spektroskopie, Time of Flight Secondary Ion Mass Spectrometry (TOF-SIMS), EELS (electron energy loss spectroscopy), HAADF (high angle annular dark field) oder NIR (near infrared spectroscopy) in Erfahrung gebracht werden.

Die erfindungsgemäß erzeugten und die oben beschriebenen Nanostrukturen aufweisenden Oberflächen, die chemisch modifiziertes erfindungsgemäßes Oberflächenmaterial umfassen, sorgen für eine ausgezeichnete Haftung von Klebstoffen, Lacken und sonstigen Beschichtungen. Wenn auf mindestens einem Werkstück mit einer Oberfläche, die erfindungsgemäßes Oberflächenmaterial umfasst, erfindungsgemäß Nanostrukturen unter chemischer Modifikation des erfindungsgemäßen Oberflächenmaterial erzeugt worden sind, können zwei derartige Werkstücke oder ein derartiges Werkstück mit einem mit einem Werkstück mit einer Oberfläche aus einem anderen Werkstoff durch bloßes Fügen unter erhöhtem Druck bei Raumtemperatur oder bei erhöhten Temperaturen mit zufriedenstellender Haftung miteinander verbunden werden.

Die Nanostrukturierung und chemische Modifikation der erfindungsgemäßen Oberflächen kann aber auch für andere Zwecke als die Verbesserung der Haftung erfolgen. Allgemein können mit ihr Änderungen der physikalischen und/oder chemischen Wechselwirkung der Oberfläche mit Licht oder Materie erzielt werden. Zum Beispiel kann die Nanostrukturierung mit einer Veränderung der Farbe oder Emissivität oder elektrischen Leitfähigkeit oder Korrosionspotential der Oberfläche einhergehen. Die starke Erhöhung der Oberfläche sowie die Bildung von schmalen Graten enthaltenden Oberflächenstrukturen durch die Nanostrukturierung kann auch eine starke Erhöhung von katalytischen Wirkungen der Oberfläche selbst oder einer dünnen und/oder nanoskaligen Beschichtung auf derselben zur Folge haben, da heterogene Katalyse bekanntlich ein Oberflächenphänomen ist. Auch rein physikalische Phänomene, wie die Erhöhung der Zahl der Punkte, an denen sich Kristallkeime oder Blasenkeime bilden können, können genutzt werden. Ein Beispiel aus dem Alltag wäre ein Bier- oder Sektglas oder eine Cappuccino-Tasse mit nanostrukturierter Oberfläche, das bzw. die zu einem verbesserten Aufschäumverhalten des Getränks führt.

Die anorganische Oberfläche von Grünvorkörpern kann vor dem Brennen gegebenenfalls mit Klebstoffen, Lacken und sonstigen Beschichtungen versehen werden und, falls gewünscht mit der Oberfläche eines zweiten Werkstückes verbunden. Das Brennen wird anschließend vorgenommen. Dies kann z.B. dann gegenüber der Verbindung von gebrannter Keramik mit einer Beschichtung oder einem zweiten Werkstück von Vorteil sein, wenn dadurch Spannungen an der Grenzfläche vermindert werden oder die Festigkeit erhöht wird.

Ein Bespiel für besonders bevorzugte Werkstücke mit erfindungsgemäß hergestellter Oberfläche sind Keramik- oder Keramikverbundwerkstoffprothesen und Keramik- oder Keramikverbundwerkstoffimplantate. Ihre nanostrukturierte Oberflächen sorgen dafür, dass die biologischen Materialien im Körper, mit denen sie verwachsen sollen, hervorragend an den Oberflächen haften.

Die Verwendung eines Werkstücks mit erfindungsgemäß hergestellter, chemisch modifizierter Oberfläche beim Beschichten des Werkstücks mit einem gleichartigen oder verschiedenen Material mit oder ohne Klebstoff ist ein weiterer Aspekt der Erfindung. Bei der Beschichtung kann es sich um jede beliebige geeignete Beschichtung für ein erfindungsgemäßes Oberflächenmaterial handeln und sie kann durch jegliche geeignete Weise aufgebracht werden. Als ausgewählte Beispiele werden Lote, durch thermisches und nicht-thermisches Spritzen aufgebrachte Beschichtungen, Beschichtungen über Nasschemie oder Gasphase (z.B. PVD), Beschichtungen mit glasartigen Materialien, Keramiken und organischen Materialien, einschließlich biologischer Materialien oder biologischen Gewebes, die gegebenenfalls direkt auf der erfindungsgemäß hergestellten, chemisch modifizierten Oberfläche erzeugt werden, genannt.

Die folgenden Beispiele erläutern die Erfindung, ohne sie zu beschränken.

**Beispiele**

In den Ausführungsbeispielen 1 bis 4 werden die Faserverbundwerkstoffe aus Tabelle 1 verwendet. Alle Versuche wurden bei Umgebungsdruck und Umgebungstemperatur durchgeführt. Neben Umgebungsluft wurden zur chemischen Modifikation des Weiteren Sauerstoff und Stickstoff verwendet.

Tab. 1: Übersicht über die keramischen Faserverbundwerkstoffe

| Beispiel | CMC Werkstofftyp | Faserarchitektur | Fasertyp | Matrix | Herstellprozess | Schutzschicht |
|---|---|---|---|---|---|---|
| 1 | C/SiC | 2D - 0/90° | C | SiC | PIP | - |
| 2 | C/SiC beschichtet | 2D - 20°/70° | C | SiC | PIP | 200 $\mu$m CVD-SiC |
| 3 | Ox/Ox | 2D-QI | $Al_2O_3$ | $Al_2O_3$-$SiO_2$/SiOC | PIP | - |
| PIP = Polymer-Infiltration und Pyrolyse | | | | | | |

**Beispiel 1**

Die **Figuren 1(a) und 1(b)** zeigen eine unbehandelte Oberfläche einer C/SiC Oberfläche (s. Tab 1) in zwei Vergrößerungen. Es sind auf beiden Vergrößerungen Matrix und darunter liegende bzw. freiliegende Fasern zu erkennen.

**Verfahren A**

Die C/SiC Oberfläche aus Figur 1 wurde ohne irgendeine Vorbehandlung zweimal mit einem diodengepumpten Nd:YAG Laser der Wellenlänge $\lambda$: 1064 nm bei Umgebungsatmosphäre, Umgebungsdruck und Umgebungstemperatur abgetastet.

Die Verfahrensparameter waren im Einzelnen:

$\lambda$: 1064 nm, $P_p$: 86 kW; $P_m$: 11,5 W; t: 13 ns; f: 10 kHz; v: 800 mm/s; d: 80 $\mu$m; $\alpha$: 60 %; $T_L$: 3823 K; $c_p$: 750 J/kgK; $\kappa$: 100 W/mK.

Daraus ergibt sich $\varepsilon$ **= 54,3,** d.h. $\varepsilon$ liegt im erfindungsgemäßen Bereich.

Die auf der Faser erzeugte Oberflächenstruktur ist in der REM-Aufnahme der **Figur 2** gezeigt.

**Verfahren B**

Die C/SiC Oberfläche aus Figur 1 wurde ohne irgendeine Vorbehandlung einmal mit einem diodengepumpten Nd:YAG Laser der Wellenlänge $\lambda$: 533 nm bei Umgebungsatmosphäre, einmal bei Sauerstoffatmosphäre und einmal bei Stickstoffatmosphäre, Umgebungsdruck und Umgebungstemperatur abgetastet.

Die Verfahrensparameter waren im Einzelnen:

$\lambda$: 533 nm, $P_p$: 68 kW; $P_m$: 77 W; t: 57 ns; f: 20 kHz; v: 100 mm/s; d: 80 $\mu$m; $\alpha$: 75 %; $T_L$: 2673 K; $c_p$: 900 J/kgK; $\kappa$: 70 W/mK.

Daraus ergibt sich $\varepsilon$ = **1677,** d.h. $\varepsilon$ liegt im erfindungsgemäßen Bereich.

**Umgebungsatmosphäre**

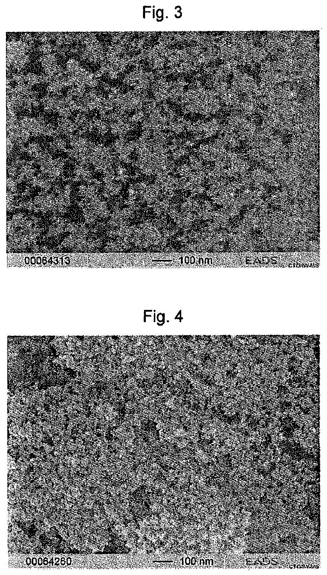

Die auf der Matrix erzeugte Oberflächenstruktur bei Umgebungsatmosphäre ist in der REM-Aufnahme der **Figur 3** gezeigt.

**Stickstoffatmosphäre**

Die auf der Matrix erzeugte Oberflächenstruktur bei Stickstoffatmosphäre ist in der REM-Aufnahme der **Figur 4** gezeigt.

Die elementare Zusammensetzung der in den Figuren 1, 3 und 4 gezeigten Oberflächen der Matrix sowie einer wie Figur 1 gezeigten Oberfläche, mit Sauerstoff behandelt wurde, wurde nach der Laserbehandlung mittels XPS analysiert.

Die Ergebnisse sind in der folgenden Tabelle 2 zusammengefasst.

**Tabelle 2**

| Oberfläche C/SiC | At-% | | | | |
|---|---|---|---|---|---|
| | **C** | **N** | **O** | **Na** | **Si** |
| Unbehandelt (s. Fig. 1) | 44,6 | 14,6 | 18,8 | 0,7 | 21,3 |
| Laserbehandlung unter Luft (s. Fig. 3) | 8,3 | - | 66,2 | - | 25,5 |
| Laserbehandlung unter Sauerstoff | 8,8 | - | 66,3 | - | 24,9 |
| Laserbehandlung unter Stickstoff (s. Fig. 4) | 29,6 | 10,2 | 34,5 | - | 25,7 |

Wie aus der Tabelle 2 ersichtlich ist, wird ein Teil des Kohlenstoff und des Stickstoff an der Oberfläche der Matrix durch Sauerstoff verdrängt, wenn die Laserbehandlung unter Luft- und Sauerstoffatmosphäre stattfindet. Unter Stickstoffatmosphäre erhöht sich der Stickstoffanteil an der Oberfläche.

**Beispiel 2**

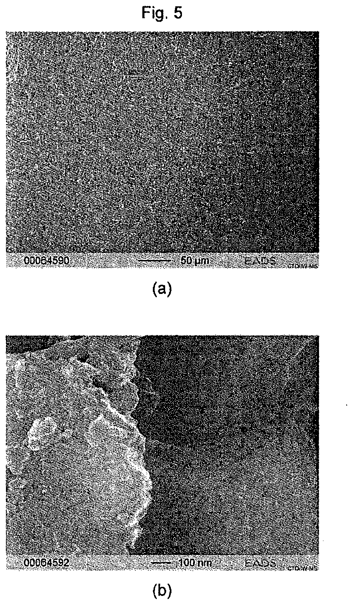

Die **Figuren 5(a) und (b)** zeigen eine unbehandelte Oberfläche eines SiC-beschichteten C/SiC-Verbunds (s.

Tab 1) in zwei Vergrößerungen. Es ist die Beschichtung (SiC, s. Tab 1) auf der Matrix zu erkennen

Die beschichtete C/SiC-Oberfläche aus Figur 5 wurde ohne irgendeine Vorbehandlung einmal mit einem diodengepumpten Nd:YAG Laser der Wellenlänge $\lambda$: 1064 nm bei Umgebungsatmosphäre und einmal bei Stickstoffatmosphäre jeweils bei Umgebungsdruck und Umgebungstemperatur abgetastet.

Die Verfahrensparameter waren im Einzelnen:
$\lambda$: 1064 nm, $P_p$: 115 kW; $P_m$: 14 W; t: 17 ns; f: 12,5 kHz; v: 800 mm/s; d: 125 $\mu$m; $\alpha$: 75 %; $T_L$: 2773 K; $c_p$: 980 J/kgK; $\kappa$: 3 W/mK.

Daraus ergibt sich $\varepsilon$ = **13,9**, d.h. $\varepsilon$ liegt im erfindungsgemäßen Bereich.

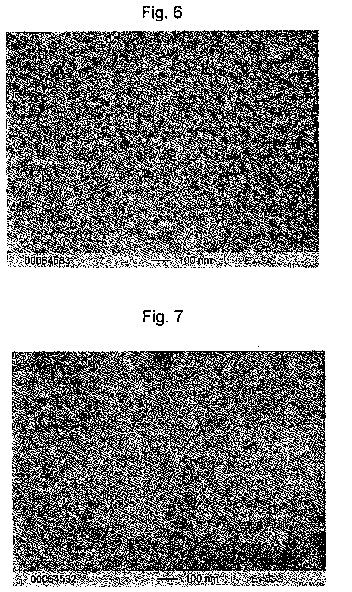

Die auf der SiC-beschichteten Matrix des C/SiC-Verbunds bei Umgebungsatmosphäre erzeugte Oberflächenstruktur ist in der REM-Aufnahme der **Figur 6** gezeigt.

Die auf der SiC-beschichteten Matrix des C/SiC-Verbunds bei Stickstoffatmosphäre erzeugte Oberflächenstruktur ist in der REM-Aufnahme der **Figur 7** gezeigt.

Die elementare Zusammensetzung der in den Figuren 5, 6 und 7 gezeigten Oberflächen wurde nach der Laserbehandlung mittels XPS analysiert.

Die Ergebnisse sind in der folgenden Tabelle 3 zusammengefasst.

**Tabelle 3**

| | At-% | | | | |
|---|---|---|---|---|---|
| Oberfläche der SiC-beschichteten Matrix des C/SiC-Verbunds | C | N | O | Ca | Si |
| Unbehandelt (Fig. 5) | 40,3 | - | 22,7 | 0,2 | 36,8 |
| Laserbehandlung unter Luft (Fig. 6) | 3,6 | 0,4 | 69,7 | - | 26,3 |
| Laserbehandlung unter Stickstoff (Fig. 7) | 27,2 | 4,5 | 40,8 | - | 27,5 |

Wie aus der Tabelle 3 ersichtlich ist, wird ein Teil des Kohlenstoff und des Calcium an der Oberfläche der Matrix durch Sauerstoff verdrängt, wenn die Laserbehandlung unter Luftatmosphäre stattfindet. Es bildet sich $SiO_2$. Unter Stickstoffatmosphäre erhöht sich der Stickstoffanteil an der Oberfläche.

**Beispiel 3**

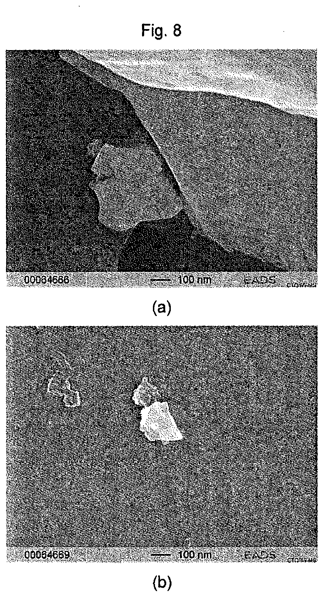

Die **Figuren 8(a) und 8(b)** zeigen eine unbehandelte Oberfläche eines Oxidkeramische Faser/Oxidkeramische Matrix-Verbunds (Ox/Ox) (s. Tab 1) in zwei Vergrößerungen. Es ist die Matrix zu erkennen.

**Verfahren A**

Die Ox/Ox-Oberfläche aus Figur 8 wurde ohne irgendeine Vorbehandlung zweimal mit einem diodengepumpten Nd:YAG Laser der Wellenlänge $\lambda$: 1064 nm bei Umgebungsatmosphäre, Umgebungsdruck und Umgebungstemperatur abgetastet.

Die Verfahrensparameter waren im Einzelnen für die Matrix des Ox/Ox-Verbunds:
$\lambda$: 1064 nm, $P_p$: 38 kW; $P_m$: 6 W; t: 17 ns; f: 10 kHz; v: 800 mm/s; d: 80 $\mu$m; $\alpha$: 60 %; $T_L$: 2023 K; $c_p$: 950 J/kgK; $\kappa$: 4 W/mK.

Daraus ergibt sich $\varepsilon$ = **2,1**, d.h. $\varepsilon$ liegt im erfindungsgemäßen Bereich.

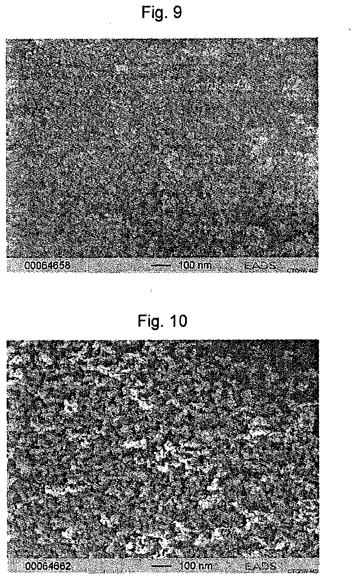

Die auf der Matrix erzeugte Oberflächenstruktur ist in der REM-Aufnahme der Figur 9 gezeigt.

**Verfahren B**

Die Ox/Ox-Oberfläche aus Figur 8 wurde ohne irgendeine Vorbehandlung einmal mit einem diodengepumpten Nd:YAG Laser der Wellenlänge $\lambda$: 1064 nm bei Umgebungsatmosphäre, einmal bei Sauerstoffatmosphäre und einmal bei Stickstoffatmosphäre, Umgebungsdruck und Umgebungstemperatur abgetastet.

Die Verfahrensparameter waren im Einzelnen:
$\lambda$: 1064 nm, $P_p$: 86 kW; $P_m$: 11,5 W; t: 13 ns; f: 10 kHz; v: 200 mm/s; d: 60 $\mu$m; $\alpha$: 60 %; $T_L$: 2023 K; $c_p$: 950 J/kgK; $\kappa$: 4 W/mK.

Daraus ergibt sich $\varepsilon$ = **47,1**, d.h. $\varepsilon$ liegt im erfindungsgemäßen Bereich.

Die auf der Matrix erzeugte Oberflächenstrukturen sind in der REM-Aufnahmen der Figuren 10 (Umgebungsatmosphäre), 11 (Sauerstoffatmosphäre) und 12 (Stickstoffatmosphäre) gezeigt.

Die elementare Zusammensetzung der in den Figuren 8, 10, 11 und 12 gezeigten der Oberfläche der Matrix wurde nach der Laserbehandlung mittels XPS analysiert.

Die Ergebnisse sind in der folgenden Tabelle 4 zusammengefasst.

**Tabelle 4**

| Ox/Ox-Matrix-Oberfläche | At-% | | | | | | | |
|---|---|---|---|---|---|---|---|---|
| | C | N | O | Na | Al | Si | Cl | Ca |
| Unbehandelt (Fig. 8) | 45,0 | 3,6 | 36,8 | 0,9 | 2,6 | 10,5 | 0,1 | 0,5 |
| Laserbehandlung unter Luft (Fig. 10) | 5,6 | 0,5 | 66,1 | 1,8 | 2,3 | 23,7 | - | - |
| Laserbehandlung unter Sauerstoff (Fig. 11) | 40,1 | 2,9 | 40,6 | 1,0 | 2,0 | 12,9 | 0,2 | 0,3 |
| Laserbehandlung unter Stickstoff (Fig. 12) | 11,3 | 2,4 | 59,8 | 1,5 | 7,3 | 17,7 | - | - |

Wie aus der Tabelle 4 ersichtlich ist, wird ein Teil des Kohlenstoff, des Stickstoff, Chlor und Calcium an der Oberfläche der Matrix durch Sauerstoff verdrängt, wenn die Laserbehandlung unter Luftatmosphäre stattfindet. Die Behandlung unter Stickstoffatmosphäre zeigt die gleiche Wirkung wie unter Laserbehandlung an Luft. Unter Stickstoffatmosphäre wird der Sauerstoffanteil an der Probenoberfläche deutlich erhöht und der Kohlenstoffanteil verringert. Unter Sauerstoffatmosphäre verändert sich die Zusammensetzung Oberfläche wenig, d.h. Sauerstoff ist in diesem Fall ein inertes Gas. Der Grund dafür ist, dass die Ox/Ox-Oberfläche ohnehin vollständig oxidiert ist und demgemäß keine die Zusammensetzung verändernde Reaktion mit Sauerstoff eingeht.

**Patentansprüche**

1.  Verfahren zur Erzeugung einer Oberfläche eines Werkstücks, welche Oberflächenstrukturen mit Abmessungen im Sub-Mikrometerbereich aufweist, wobei die Oberfläche ein Material umfasst, das aus mindestens einer Keramik, mindestens einem Fasern und/oder nicht faserigen Kohlenstoff und/oder Bornitrid enthaltenden Verbundwerkstoff mit Kohlenstoff- und/oder Keramikmatrix oder einer Kombination derselben ausgewählt ist, bei dem eine das genannte Material umfassende Ausgangsoberfläche, welche noch nicht Oberflächenstrukturen mit Abmessungen im Sub-Mikrometerbereich aufweist und welche für eine Laserbestrahlung zugänglich ist und auf welcher die Oberflächenstrukturen zu erzeugen sind, vollständig mit einem gepulsten Laserstrahl ein- oder mehrmals auf solche Weise abgetastet wird, dass benachbarte Lichtflecke des Laserstrahls lückenlos aneinander stoßen oder sich überlappen, wobei die folgenden Bedingungen eingehalten werden:

$$0,07 \; \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 3000 \; \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$$

mit

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

worin:

$P_p$: Impulsspitzenleistung der austretenden Laserstrahlung [kW]
$P_m$: Mittlere Leistung der austretenden Laserstrahlung [W]
t: Impulslänge der Laserimpulse [ns], wobei t 0,1 ns bis 4000 ns ist,
f: Repetitionsrate der Laserimpulse [kHz]
v: Abtastgeschwindigkeit an der Werkstückoberfläche [mm/s]
d: Durchmesser des Laserstrahls am Werkstück [$\mu$m]
$\alpha$: Absorption der Laserstrahlung des bestrahlten Material [%] bei Normalbedingungen
$\lambda$: Wellenlänge der Laserstrahlung [nm], wobei $\lambda$ = 100 nm bis 11000 nm
$T_L$: Schmelztemperatur des Materials [K] bei Normaldruck
$c_p$: Spezifische Wärmekapazität [J/kg·K] bei Normalbedingungen

κ: Spezifische Wärmeleitfähigkeit [W/m·K] bei Normalbedingungen,

wobei die Atmosphäre, in der das Verfahren stattfindet, ein gegenüber der Oberfläche unter den Verfahrensbedingungen reaktives Gas oder Gasgemisch ist, durch welches das genannte Material, welches von der Oberfläche umfasst wird, bei oder nach dem Abtasten mit dem gepulsten Laserstahl gegenüber seiner Zusammensetzung vor dem Abtasten mit dem Laserstrahl chemisch modifiziert wird,
mit der Maßgabe, dass vor dem Abtasten mit dem Laserstrahl kein Haftvermittler aufgebracht wird.

2. Verfahren nach Anspruch 1, bei dem der Druck im Bereich von 0,001 mbar bis 15 bar liegt und die Temperatur außerhalb des Laserstrahls im Bereich von - 50°C bis 350°C liegt.

3. Verfahren nach Anspruch 1 oder 2, bei dem $$0,1 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq$$

$$2000 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}},$$ mehr bevorzugt $$0,1 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon$$

$$\leq 1500 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}.$$

4. Verfahren nach einem der Ansprüche 1 bis 3, bei dem die Impulslänge der Laserimpulse t 0,1 ns bis 2000, mehr bevorzugt 0,1 ns bis 900 ns, insbesondere 1 ns bis 800 ns beträgt.

5. Verfahren nach einem der Ansprüche 1 bis 4, bei dem die Oberfläche vor dem Bestrahlen mit dem Laserstrahl nicht vorbehandelt oder gereinigt wird.

6. Verfahren nach einem der Ansprüche 1 bis 5, bei dem die Impulsspitzenleistung der austretenden Laserstrahlung $P_p$ 1 kW bis 1800 kW beträgt.

7. Verfahren nach einem der Ansprüche 1 bis 6, bei dem die mittlere Leistung der austretenden Laserstrahlung $P_m$ 5 W bis 28000 W beträgt.

8. Verfahren nach einem der Ansprüche 1 bis 7, bei dem die Repetitionsrate der Laserimpulse f 10 kHz bis 3000 kHz beträgt.

9. Verfahren nach einem der Ansprüche 1 bis 8, bei dem die Abtastgeschwindigkeit an der Werkstückoberfläche v 30 mm/s bis 19000 mm/s beträgt.

10. Verfahren nach einem der Ansprüche 1 bis 9, bei dem Durchmesser des Laserstrahls am Werkstück d 20 μm bis 4500 μm beträgt.

**Claims**

1. Process for producing a surface of a workpiece that has surface structures with dimensions in the sub-micrometre range, the surface comprising a material that is selected from at least one ceramic, at least one fibre- and/or non-fibrous carbon- and/or boron-nitride-containing composite material with a carbon and/or ceramic matrix or a combination of the same, in which a starting surface comprising the said material which does not yet have surface structures with dimensions in the sub-micrometre range and which is accessible to a laser beam irradiation and on which the surface structures are to be formed is completely scanned with a pulsed laser beam one or more times in such a way that adjacent light spots of the laser beam abut one another without any gaps or overlap, the following conditions being satisfied:

$$0,07 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 3000 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$$

where:

$$\varepsilon = \frac{P_p^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

in which:

$P_p$ is the peak pulse power of the exiting laser radiation [kW];
$P_m$ is the average power of the exiting laser radiation [W] ;
t is the pulse length of the laser pulses [ns], where t is 0.1 ns to 4000 ns;
f is the repetition rate of the laser pulses [kHz];
v is the scanning speed on the workpiece surface [mm/s];
d is the diameter of the laser beam on the workpiece [$\mu$m];
$\alpha$ is the absorption of the laser radiation of the irradiated material [%] under normal conditions;
$\lambda$ is the wavelength of the laser radiation [nm], where $\lambda$ = 100 nm to 11000 nm;
$T_L$ is the melting temperature of the material [K] under normal pressure;
$c_p$ is the specific heat capacity [J/kg·K] under normal conditions;
$\kappa$ is the specific thermal conductivity [W/m·K] under normal conditions,

the atmosphere in which the process takes place being a gas or gas mixture which is reactive with respect to the surface under the process conditions and through which the said material which is comprised by the surface is chemically modified during or after the scanning with the pulsed laser beam with respect to its composition prior to scanning with the laser beam,
with the proviso that no adhesion promoter is applied before the scanning with the laser beam.

2. Process according to Claim 1, in which the pressure lies in the range of 0.001 mbar to 15 bar and the temperature outside the laser beam lies in the range of - 50°C to 350°C.

3. Process according to Claim 1 or 2, in which $0{,}1\frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 2000\frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$, more

preferably $0{,}1\frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 1500\frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$.

4. Process according to one of Claims 1 to 3, in which the pulse length of the laser pulses t is 0.1 ns to 2000, more preferably 0.1 ns to 900 ns, in particular 1 ns to 800 ns.

5. Process according to one of Claims 1 to 4, in which the surface is not pretreated or cleaned before the irradiation with the laser beam.

6. Process according to one of Claims 1 to 5, in which the peak pulse power of the exiting laser radiation $P_p$ is 1 kW to 1800 kW.

7. Process according to one of Claims 1 to 6, in which the average power of the exiting laser radiation $P_m$ is 5 W to 28 000 W.

8. Process according to one of Claims 1 to 7, in which the repetition rate of the laser pulses f is 10 kHz to 3000 kHz.

9. Process according to one of Claims 1 to 8, in which the scanning speed on the workpiece surface v is 30 mm/s to 19 000 mm/s.

10. Process according to one of Claims 1 to 9, in which the diameter of the laser beam on the workpiece d is 20 $\mu$m to 4500 $\mu$m.

**Revendications**

1. Procédé destiné à l'obtention d'une surface d'une pièce de fabrication, laquelle comporte des structures de surface de dimensions submicrométriques, dans lequel la surface comprend un matériau, lequel est sélectionné parmi au moins une céramique, au moins un matériau composite contenant des fibres et/ou du carbone non-fibreux et/ou du nitrure de bore avec une matrice carbone et/ou céramique ou une combinaison de ceux-ci, lors duquel une surface d'origine comprenant le matériau nommé, laquelle ne comporte pas encore de structures de surface de dimensions submicrométriques et laquelle est accessible pour un rayonnement laser et sur laquelle les structures de surface doivent être produites, est entièrement balayée avec un rayon laser pulsé à une ou plusieurs reprises, de sorte que des points lumineux adjacents du rayon laser se touchent sans interstices ou se recouvrent, dans lequel les conditions suivantes sont remplies :

$$0,07 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 3000 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$$

avec

$$\varepsilon = \frac{P_p^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

où :

$P_p$ : puissance de crête d'impulsion du rayonnement laser sortant [kW]
$P_m$ : puissance moyenne du rayonnement laser sortant [W]
$t$ : durée des impulsions laser [ns], dans lequel t est de 0,1 ns à 4000 ns,
$f$ : fréquence de répétition des impulsions laser [kHz] $v$ : vitesse de balayage sur la surface de la pièce de fabrication [mm/s]
$d$ : diamètre du rayon laser sur la pièce de fabrication [$\mu$m]
$\alpha$ : absorption du rayonnement laser du matériau irradié [%] en conditions normale
$\lambda$ : longueur d'onde du rayonnement laser [nm], dans lequel $\lambda$ = 100 nm à 11 000 nm
$T_L$ : température de fusion du matériau [K] sous une pression normale
$c_P$ : capacité thermique massique [J/kg·K] dans les conditions normales
$\kappa$ : conductivité thermique spécifique [W/m·K] dans les conditions normales, dans lequel l'atmosphère où le procédé se déroule est un gaz ou un mélange de gaz réactif par rapport à la surface sous les conditions du procédé, par laquelle le matériau nommé, lequel est compris par la surface, est chimiquement modifié lors du balayage ou après le balayage avec le rayon laser pulsé, par rapport à sa composition avant balayage avec le rayon laser, avec la condition qu'aucun agent liant n'est déposé avant le balayage avec le rayon laser.

2. Procédé d'après la revendication 1, lors duquel la pression se trouve dans un intervalle de 0,001 mbar à 15 bar et la température à l'extérieur du rayon laser se trouve dans un intervalle de -50 °C à 350 °C.

3. Procédé d'après la revendication 1 ou 2, lors duquel

$$0,1 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 2000 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$$ plus particulièrement

$$0,1 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}} \leq \varepsilon \leq 1500 \frac{kW^2 \cdot \sqrt{W} \cdot kHz \cdot \% \cdot \sqrt{ns} \cdot \sqrt{W/m \cdot K}}{\mu m^2 \cdot \sqrt{mm/s} \cdot \sqrt{K} \cdot \sqrt{J/kg \cdot K} \cdot \sqrt{nm}}$$

4. Procédé d'après l'une des revendications 1 à 3, lors duquel les durées des impulsions laser valent de 0,1 ns à 2 000, de préférence de 0,1 ns à 900 ns, en particulier de 1 ns à 800 ns.

5. Procédé d'après l'une des revendications 1 à 4, lors duquel la surface n'est pas prétraitée ou nettoyée avant l'irradiation avec le rayon laser.

6. Procédé d'après l'une des revendications 1 à 5, lors duquel la puissance de crête d'impulsion du rayonnement laser sortant $P_p$ vaut entre 1 kW et 1 800 kW.

7. Procédé d'après l'une des revendications 1 à 6, lors duquel la puissance moyenne du rayonnement laser sortant $P_m$ vaut entre 5 W et 28 000 W.

8. Procédé d'après l'une des revendications 1 à 7, lors duquel la fréquence de répétition des impulsions laser f vaut entre 10 kHz et 3 000 kHz.

9. Procédé d'après l'une des revendications 1 à 8, lors duquel la vitesse de balayage sur la surface de la pièce de fabrication v vaut entre 30 mm/s et 19 000 mm/s.

10. Procédé d'après l'une des revendications 1 à 9, lors duquel le diamètre du rayon laser sur la pièce de fabrication d vaut entre 20 $\mu$m et 4 500 $\mu$m.

Fig. 1

(a)

(b)

Fig. 2

Fig. 3

Fig. 4

Fig. 5

(a)

(b)

Fig. 6

Fig. 7

Fig. 8

(a)

(b)

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0914395 B1

- US 6120725 A